# FASCICULE DE BREVET EUROPEEN

(11) **EP 2 481 643 B1**
(45) Date de publication et mention de la délivrance du brevet: **10.07.2013**
(21) Numéro de dépôt: 12000016.1
(22) Date de dépôt: 03.01.2012
(51) Int. Cl.: B60R 21/239, B60R 21/276

(54) **Dispositif de protection d'un occupant d'un véhicule, siége et véhicule associé**
Schutzvorrichtung eines Insassen eines Fahrzeugs,entsprechende Sitz und Fahrzeug
Vehicule-occupant protection device, seat and vehicle, associated seat and vehicle

(30) Priorité: 28.01.2011 FR 1100267
(43) Date de publication de la demande: 01.08.2012
(73) Titulaire: EUROCOPTER, 13725 Marignane cedex (FR)
(72) Inventeur: Santana-Gallego, Tomas, 13100 Aix en Provence (FR)
(74) Mandataire: GPI & Associés

(56) Documents cités:
- EP-A1- 1 418 093
- US-A- 5 062 662
- US-B1- 6 332 629

## Description

La présente invention concerne un dispositif de protection d'un occupant d'un véhicule, ainsi qu'un siège et un véhicule associé, plus particulièrement un aéronef tel qu'un aéronef à voilure tournante.

On connaît notamment des coussins gonflables lors d'un choc visant à protéger un occupant d'un véhicule.

De tels coussins gonflables peuvent être installés dans une planche de bord, dans un fauteuil, dans des cloisons délimitant l'espace accueillant l'occupant à protéger. Conformément au document EP 1 616 760, il est aussi possible de prévoir un coussin gonflable réutilisable dans des ceintures de sécurité par exemple.

Les automobiles comportent couramment de tels coussins gonflables. Il en va parfois de même sur des aéronefs, du type aéronef à voilure tournante notamment.

Les coussins gonflables permettent de réduire les forces subies par un occupant d'un véhicule durant un accident afin de préserver leur intégrité physique. De plus, les coussins gonflables limitent le déplacement de la tête de l'occupant du véhicule et représentent une barrière contre un impact avec des organes du véhicule devenus potentiellement dangereux durant de tels accidents.

Cependant, un aéronef est susceptible de se poser sur une surface liquide lors d'un atterrissage d'urgence. Certains scenarii d'atterrissage d'urgence sont susceptible de requérir le déploiement d'un coussin gonflable sur une durée non négligeable, et non pas durant un instant ponctuel.

Le déploiement d'un coussin gonflable sur une relativement longue durée suite à un atterrissage sur une surface aqueuse soulève potentiellement une difficulté. En effet, il existe un risque non nul que l'espace entourant un occupant de l'aéronef se remplisse d'eau. Dès lors, le coussin gonflable peut constituer un obstacle important à surmonter pour que l'occupant puisse sortir de l'aéronef avant d'être immergé.

Les documents US 5 857 246 et US 6 930 611 prévoient des dispositifs aptes à ouvrir une boucle de ceinture au contact d'un liquide.

Les documents US 4 498 604 et US 4 260 075 divulguent un dispositif pour gonfler un objet, tel qu'une veste de survie, au contact d'un liquide, ce dispositif faisant intervenir un organe soluble à l'eau.

Il en va de même pour le document US 6 024 116 relatif à un domaine éloigné du problème soulevé, à savoir le domaine technique des chaudières.

Par ailleurs, on note que le document US 6 378 898 mentionne l'utilisation d'un système pour vider un coussin gonflable à l'issue d'un délai prédéterminé.

Le document EP 1 418 093 qui correspond au préambule de la revendication 1, décrit un coussin gonflable coopérant avec un moyen de gonflage. De plus, le dispositif décrit prévoit un orifice de mise à l'air ainsi qu'un tube et un moyen de retenu de ce tube.

Enfin, le document JP 11170963 semble décrire un dispositif pour empêcher le déclenchement d'un coussin gonflable en présence d'eau.

La présente invention a alors pour objet de proposer un dispositif de protection d'un occupant d'un véhicule et notamment d'un aéronef, efficace même en cas de contact avec une surface aqueuse, ce dispositif de protection réduisant voire supprimant le risque de bloquer indument l'occupant dans le véhicule par exemple en cas d'intrusion d'eau dans ce véhicule.

Selon l'invention, un dispositif de protection d'un occupant d'un véhicule comprend les caractéristiques de la revendication 1. Le moyen de gonflage est relié au coussin par une tuyauterie d'alimentation en fluide de gonflage pour gonfler le coussin dans des conditions prédéterminées, suite à un accident de type atterrissage d'urgence pour un aéronef notamment.

On peut se référer à la littérature pour obtenir des informations sur des moyens de gonflage de coussin gonflable de protection ainsi que sur lesdites conditions prédéterminées.

Ce dispositif est notamment remarquable en ce qu'il comporte un moyen d'expulsion du fluide de gonflage coopérant avec au moins un moyen de détection d'un événement prédéterminé pour évacuer ce fluide de gonflage suite à un gonflement du coussin lorsque un tel événement prédéterminé se produit, postérieurement au gonflement du coussin, le coussin étant muni d'une sangle élastique périphérique pour optimiser le dégonflement du coussin lorsque la vanne permet une évacuation du fluide de gonflage hors du coussin.

Ainsi, dans les conditions prédéterminées, le moyen de gonflage gonfle le coussin pour protéger un occupant d'un véhicule. Par exemple, le moyen de gonflage injecte de l'air sous pression dans le coussin.

La sangle du coussin de protection étant élastique, cette sangle se détend et n'entrave pas le gonflement du coussin.

Le moyen d'expulsion est alors dans une première position fermée et empêche le fluide de gonflage de sortir du coussin. Il est à noter que l'on entend par « moyen d'expulsion » une vanne, un clapet ou tout autre moyen équivalent tel que par exemple un piston apte à obturer un orifice de sortie dans la première position.

Par contre, si le moyen de détection relève l'apparition d'un événement prédéterminée à choisir par exemple dans une liste incluant la présence d'eau, la présence d'un incendie et l'ouverture d'une ceinture de sécurité postérieurement au gonflement du coussin, le moyen de détection autorise le basculement du moyen d'expulsion de la première position vers une deuxième position permettant l'évacuation du fluide de gonflage hors du coussin.

La sangle élastique étant fixée sur l'enveloppe délimitant le coussin ou à deux zones extrémales de ce coussin par exemple, la pression exercée par cette sangle élastique sur l'enveloppe apporte une énergie suffisante pour chasser le fluide de gonflage hors du coussin à travers le moyen d'expulsion.

Par conséquent, le coussin induit une gêne au moins minimisée par rapport à un dispositif de protection classique lors de l'évacuation de l'occupant en dehors du véhicule.

L'invention peut de plus comporter une ou plusieurs des caractéristiques qui suivent.

Par exemple, le moyen d'expulsion est éventuellement agencé sur la tuyauterie d'alimentation. Les coussins sont alors dépourvus d'évent ce qui facilite leur fabrication notamment. La pression exercée par la sangle permet un tel agencement du moyen d'expulsion.

Selon un autre aspect, le moyen d'expulsion peut comporter un orifice de sortie du fluide de gonflage vers un milieu extérieur au dispositif et un organe mobile apte à empêcher un passage du fluide de gonflage au travers de l'orifice de sortie en l'absence d'un événement prédéterminé. Le moyen de détection coopère alors avec l'organe mobile pour permettre le passage du fluide de gonflage au travers de l'orifice de sortie en présence d'un événement prédéterminé, en présence d'eau par exemple.

Selon une réalisation active de manière électrique, le moyen de détection transmet un signal électrique à une unité de contrôle tel qu'un microprocesseur ou un moyen électronique équivalent par exemple, cette unité de contrôle ordonnant à un moteur électrique de déplacer l'organe mobile dans la deuxième position d'expulsion du fluide de gonflage.

Selon une réalisation passive mécanique, le moyen de détection inclut un organe de détection d'eau pourvu d'un moyen soluble coopérant avec l'organe mobile.

Par exemple, le moyen soluble est un anneau soluble plaquant un organe de maintien contre une partie de blocage de l'organe mobile. En présence d'eau, l'anneau soluble est dissout. Par suite, l'organe mobile n'est plus bloqué contre l'organe de maintien et se déplace pour être disposé dans ladite deuxième position.

Par ailleurs, le moyen de gonflage peut d'une part comporter un gonfleur relié au coussin par la tuyauterie d'alimentation et d'autre part comporter une unité de contrôle reliée au gonfleur, l'unité de contrôle ordonnant au gonfleur de gonfler le coussin dans lesdites conditions prédéterminées.

Par exemple durant un atterrissage d'urgence, l'unité de contrôle requiert le gonflement du coussin gonflable, le gonfleur pouvant notamment être un moyen explosif ou électrique.

De plus, l'unité de contrôle peut comporter une batterie électrique et un commutateur relié en série au gonfleur, le moyen d'expulsion étant relié électriquement au gonfleur et à l'unité de contrôle.

En fonction de la présence ou de l'absence d'une condition prédéterminée, le commutateur alimente ou n'alimente pas électriquement le gonfleur.

Selon un aspect d'une réalisation électrique, le moyen de détection peut comprendre un capteur d'un événement prédéterminé relié électriquement à un interrupteur principal agencé entre le gonfleur et le moyen d'expulsion, l'interrupteur principal étant fermé quand l'événement prédéterminé se produit, un condensateur étant électriquement disposé en parallèle du moyen d'expulsion et de l'interrupteur principal entre le gonfleur et l'unité de contrôle.

De plus, le moyen de détection comprend par exemple interrupteur secondaire agencé entre l'unité de contrôle et le gonfleur, l'interrupteur secondaire coopérant avec le moyen de détection.

Par suite, en l'absence d'un événement prédéterminé, l'interrupteur principal est ouvert. Si l'unité de contrôle alimente électriquement le gonfleur, le condensateur se charge électriquement, le moyen d'expulsion étant au contraire inhibé.

A l'inverse, si un événement prédéterminé se produit, l'interrupteur principal est fermé. Si un interrupteur secondaire est présent, cet interrupteur secondaire coupe la liaison électrique allant de l'unité de contrôle vers le moyen d'expulsion. Le moyen d'expulsion, une électrovanne par exemple, est cependant sollicité en étant alimenté électriquement par le condensateur.

Outre un dispositif de protection tel que décrit précédemment, l'invention vise un siège d'un véhicule muni de ce dispositif de protection.

Dès lors, le coussin peut être agencé sur une ceinture de sécurité de ce siège.

Par ailleurs, selon une première variante, un moyen de détection d'eau peut être agencé sur le siège, et par exemple sur le moyen d'expulsion du fluide de gonflage.

Selon une deuxième variante, le siège ayant une zone d'assise et une zone dorsale, un moyen de détection est déporté par rapport auxdites zones.

Par exemple, sur un aéronef, on dispose un organe de détection d'eau du moyen de détection dans un espace susceptible de se remplir d'eau dès l'impact pour optimiser l'évacuation de l'occupant de l'aéronef.

Enfin, l'invention a aussi pour objet un véhicule comportant un dispositif de protection tel que décrit précédemment, un aéronef notamment et plus particulièrement un aéronef à voilure tournante.

L'invention et ses avantages apparaîtront avec plus de détails dans le cadre de la description qui suit avec des exemples de réalisation donnés à titre illustratif en référence aux figures annexées qui représentent :
- les figures 1 à 6, des schémas présentant un premier mode de réalisation,
- la figure 7, un schéma présentant un deuxième mode de réalisation, et
- les figures 8 et 9 des coupes d'un moyen d'expulsion.

Les éléments présents dans plusieurs figures distinctes sont affectés d'une seule et même référence.

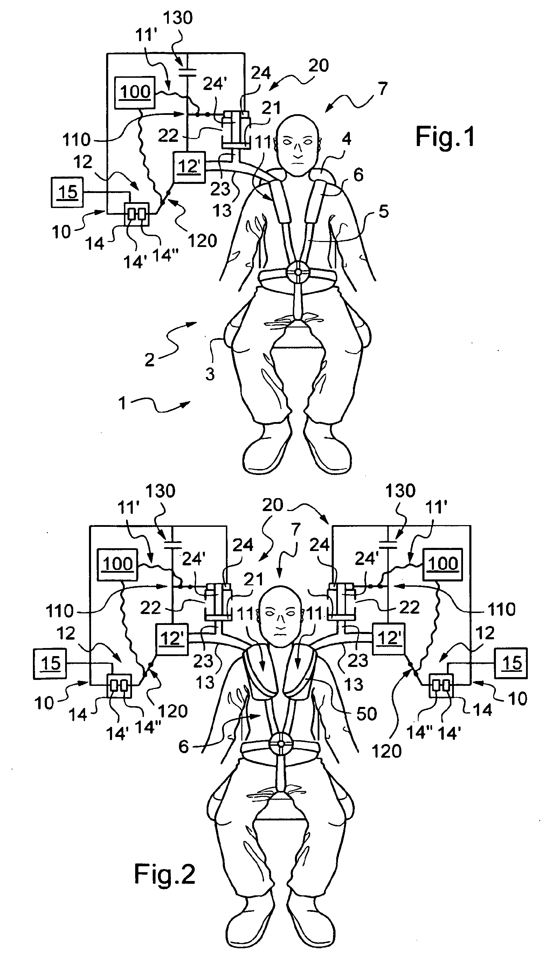

La figure 1 présente un véhicule 1. Le véhicule n'est pas distinctement représenté pour ne pas alourdir la figure 1, ce véhicule pouvant être un aéronef et notamment un aéronef à voilure tournante tel qu'un hélicoptère.

Le véhicule 1 est muni d'un siège 2 comprenant une zone d'assisse 3 et une zone dorsale 4 pour accueillir un occupant 7.

Afin de protéger l'intégrité physique de cet occupant dans des conditions prédéterminées d'urgence, le siège 2 comporte une ceinture de sécurité 6.

En outre, le véhicule 1 est équipé d'un dispositif de protection 10 comprenant au moins un coussin 11 gonflable lors desdites conditions prédéterminées, un coussin 11 dépourvu d'évent et logé dans un logement de la ceinture de sécurité 6 par exemple.

Dés lors, le dispositif de protection 10 est muni d'au moins un moyen de gonflage 12 relié à un coussin 11 par une tuyauterie d'alimentation 13. Le moyen de gonflage peut comprendre un gonfleur 12' en tant que tel relié au coussin par la tuyauterie d'alimentation 13, et une unité de contrôle 14 reliée au gonfleur 12'. L'unité de contrôle 14 comprend des capteurs usuels pour déterminer si des conditions prédéterminées sont remplies et pour ordonner au gonfleur 12' de gonfler les coussins 11 le cas échéant.

Par ailleurs, le dispositif de protection 10 comprend un moyen d'expulsion 20 et un moyen de détection 15 d'un événement prédéterminé, le moyen de détection 15 coopérant avec le moyen d'expulsion 20 pour requérir un dégonflement du coussin 11 au moment de l'apparition d'un événement prédéterminé.

En référence à la figure 2, le moyen de gonflage 12 alimente en fluide de gonflage le coussin 11 dans des conditions prédéterminées afin de déployer ce coussin 11. Par exemple, suite à la détection d'une condition prédéterminée, l'unité de contrôle 14 envoie un signal électrique au gonfleur 12', ce gonfleur 12' gonflant alors le coussin 11. On note que l'unité de contrôle peut contrôler une pluralité de gonfleurs 12', chaque gonfleur étant relié par une tuyauterie d'alimentation à un coussin 11.

Les coussins 11 sont alors déployés hors de leur logement pour protéger l'occupant 7, à savoir des logements ménagés dans la ceinture de sécurité 6 par exemple.

Toutefois, si un moyen de détection d'eau 15 détecte la présence d'eau, alors le moyen d'expulsion 20 d'un coussin éjecte le fluide de gonflage hors du coussin 11 afin de faciliter la sortie de l'occupant 7 vers l'extérieur du véhicule 1.

Pour faciliter l'éjection du fluide de gonflage hors d'un coussin 11, chaque coussin 11 comprend une sangle élastique 50 périphérique exerçant une pression sur l'enveloppe 11' du coussin 11.

La sangle 50 peut entourer ladite enveloppe ou la face du coussin 11 qui n'est pas en contact avec le buste de l'occupant 7 par exemple.

De plus, cette sangle 50 peut n'être fixée qu'à des extrémités du coussin 11.

On note que l'élasticité de la sangle 50 garantit un gonflement du coussin 11.

Par suite, lorsque le moyen d'expulsion ne relie pas à l'air libre l'intérieur du coussin 11, la sangle 50 ne gêne pas le gonflement du coussin 11. Par contre, lorsque le coussin est relié à l'air libre via le moyen d'expulsion 20, la pression exercée par la sangle sur l'enveloppe du coussin entraîne un dégonflage du coussin 11.

Selon un autre aspect, on note que chaque moyen d'expulsion 20 est agencé sur la tuyauterie d'alimentation 13 en fluide de gonflage, de l'air par exemple, d'un coussin. Toutefois, il est concevable d'agencer ce moyen d'expulsion sur le coussin par exemple.

Ce moyen d'expulsion 20 peut comporter un organe mobile 21 et un orifice de sortie 22 débouchant à l'extérieur au dispositif de protection 10, tel qu'un piston par exemple apte à empêcher le passage du fluide de gonflage au travers de l'orifice de sortie 22 dans une première position et à permettre le passage du fluide de gonflage au travers de l'orifice de sortie 22 dans une deuxième position.

Selon un premier mode de réalisation électrique présenté sur la figure 1, un moteur 24 électrique manoeuvre l'organe mobile 21 pour le déplacer de la première position vers la deuxième position si un moyen de détection d'eau 15 détecte la présence d'eau. Par exemple, le moteur 24 met alors en rotation une vis sans fin pour déplacer l'organe mobile 21 et mettre en communication l'intérieur du coussin 11 et l'orifice de sortie 22.

Le moyen d'expulsion peut aussi être une électrovanne d'un type connu.

Conformément à ce premier mode de réalisation, une unité de contrôle 14 est pourvue d'une batterie 14' et d'un commutateur 14 lié électriquement à un gonfleur 12', ce gonfleur 12' étant relié électriquement au moyen d'expulsion 20 qui reboucle sur l'unité de contrôle 14.

En outre, le moyen de détection 15 comprend au moins un capteur 100 de détection d'un événement prédéterminé, tel qu'un capteur de présence d'eau, un capteur de détection incendie ou encore un capteur d'ouverture d'une ceinture de sécurité, le capteur 100 de détection étant relié électriquement à un interrupteur principal 110 agencé entre le gonfleur 12' et le moyen d'expulsion 20.

De plus, un condensateur 130 est électriquement disposé en parallèle du moyen d'expulsion 20 et de l'interrupteur principal 110 entre le gonfleur 12' et l'unité de contrôle 14.

Par ailleurs, selon la variante représentée, le moyen de détection 15 coopère avec un interrupteur principal 110 et un interrupteur secondaire 120 agencé entre l'unité de contrôle 14 et le gonfleur 12'.

On note que l'interrupteur principal 110 et l'interrupteur secondaire 120 peuvent faire partie d'un unique interrupteur à deux voies.

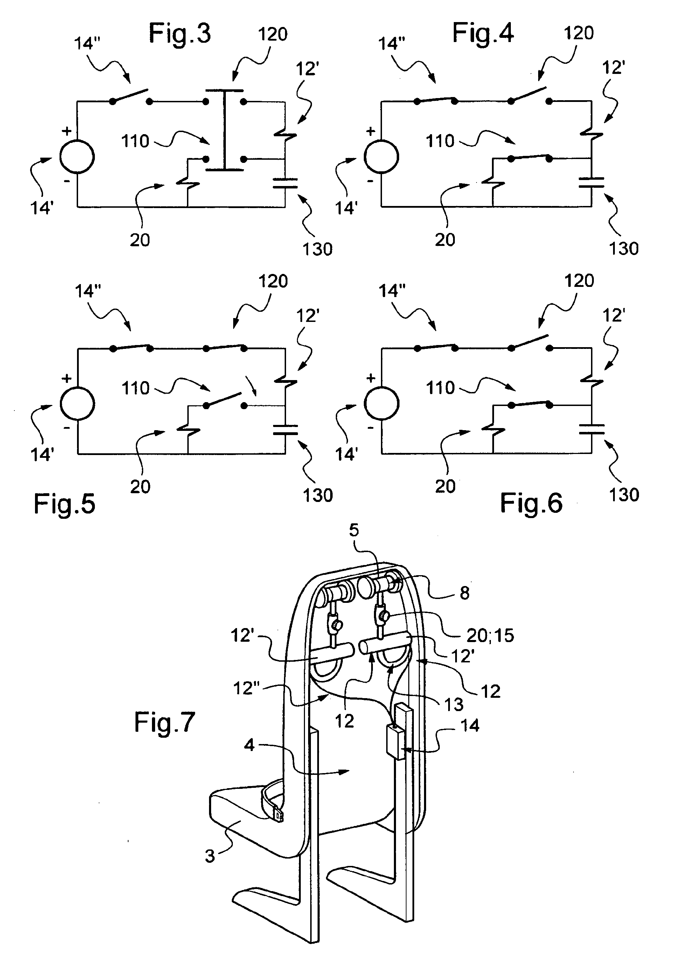

Les figures 3 à 6 explicitent le fonctionnement d'une réalisation électrique.

En référence à la figure 3, indépendamment de la position de l'interrupteur principal 110 et de l'interrupteur secondaire 120, le commutateur 14" est ouvert en l'absence des conditions prédéterminées. Par suite, le coussin gonflable ne peut pas être gonflé.

En référence à la figure 4, dans les conditions prédéterminées, le commutateur 14" est fermé. Toutefois, si le moyen de détection 15 signale la présence d'un événement prédéterminée postérieurement au gonflement du coussin, par exemple l'ouverture de la ceinture de sécurité, l'interrupteur secondaire reste ouvert. Par suite, le coussin gonflable ne peut pas être gonflé.

En référence à la figure 5, si le moyen de détection ne détecte pas l'apparition d'un événement prédéterminé, alors l'interrupteur secondaire 120 est fermé.

Dès lors, le gonfleur 12' est alimenté électriquement et gonfle le coussin.

De plus, le moyen de détection ne détecte pas l'apparition d'un événement prédéterminé, à savoir par exemple la présence d'eau, la présence d'un incendie et l'ouverture d'une ceinture de sécurité postérieurement au gonflement du coussin. Il en résulte une ouverture de l'interrupteur principal 110.

Le condensateur 130 étant en cours de chargement, le moyen d'expulsion n'est pas sollicité.

En référence à la figure 6, une fois le coussin gonflé, si un événement prédéterminé se produit, l'interrupteur secondaire 130 se ferme alors que l'interrupteur principal 120 s'ouvre. Le moyen d'expulsion 20 est alors alimenté électriquement par le condensateur pour vider le coussin.

On note que le moyen de détection 15 est éventuellement muni d'un moyen soluble pour déterminer la présence d'eau. Ce moyen soluble de détection d'eau 15 peut être agencé sur le siège, ou encore être déporté par rapport aux zones d'assise 3 et dorsale 4 de ce siège pour détecter au plus tôt l'intrusion d'eau dans le véhicule.

En référence à la figure 7, selon un deuxième mode de réalisation préféré, le moyen d'expulsion 20 est un moyen mécanique pourvu du moyen de détection 15 comprenant un organe de détection d'eau.

Le dispositif de protection comprend alors par exemple un unité de contrôle 14 reliée par des liaisons électriques 12" à un gonfleur 12' par coussin gonflable, chaque gonfleur étant relié à un coussin par une tuyauterie d'alimentation 13 telle qu'une tuyauterie d'alimentation 13 passant par exemple via un moyen de fixation 8 d'une ceinture de sécurité 6 pour rejoindre un coussin agencé dans ladite ceinture de sécurité 6. De plus, un moyen d'expulsion 20 autonome muni d'un organe de détection d'eau est agencé sur chaque tuyauterie d'alimentation 13.

En référence à la figure 4, le moyen de protection 20 peut comprendre un conduit 31 en forme de T. Une première extrémité 31' est alors fixée à une première partie 13' de la tuyauterie d'alimentation 13 par un agrafage élastique par exemple, une deuxième extrémité 31" étant fixée à une deuxième partie 13" de cette tuyauterie d'alimentation 13 éventuellement par un agrafage élastique. La troisième extrémité 31"' du conduit 31 saille vers l'extérieur de la tuyauterie d'alimentation 13, cette troisième extrémité comportant un orifice de sortie 22 pour évacuer vers l'extérieur EXT le fluide de gonflage contenu dans le coussin 11.

De plus, le moyen de protection 20 présenté comprend un bouchon 30 fixé à la troisième extrémité 31"' par un filetage 210 ou tout moyen équivalent. Ce bouchon 30 peut de plus comprendre un fond muni de lumières 34.

Par ailleurs, le moyen de protection 20 comprend un organe mobile 21 tel qu'un piston 21' solidaire d'une tige 25, la tige 25 s'étendant d'une première portion distale 25' fixée au piston vers une deuxième potion distale 25".

L'organe mobile et notamment le piston 31' de cet organe mobile est disposé en amont de l'orifice de sortie 22, selon un sens de circulation d'un fluide allant de la tuyauterie d'alimentation 13 vers cet orifice de sortie 22. Un joint 22' est disposé entre l'organe mobile 21' est la troisième extrémité 31"' du conduit 31.

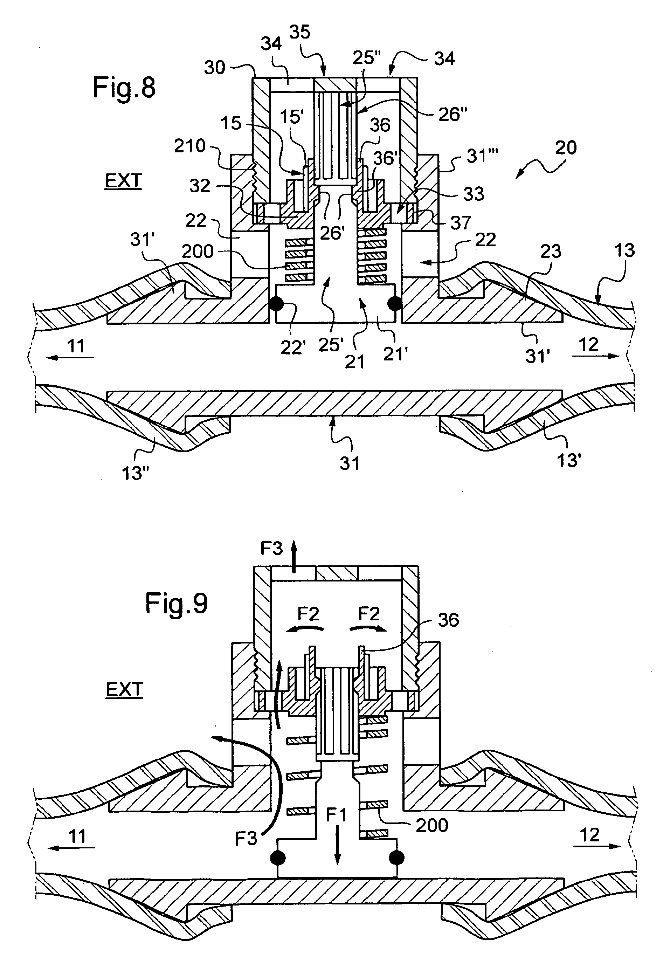

Dès lors, lorsque l'organe mobile 21 est dans la première position représentée sur la figure 8, cet organe mobile empêche la circulation du fluide de la tuyauterie d'alimentation 13 vers l'orifice de sortie 22. De plus, on note que la deuxième portion distale 25" bute contre un siège 35 du bouchon 30 afin d'empêcher un déplacement indu de l'organe mobile, sous l'effet de la pression régnant dans la portion du conduit 31 allant de la première extrémité 31' vers la deuxième extrémité 31".

Par ailleurs, l'organe mobile 21 coopère avec un moyen soluble 15'.

Ainsi, le moyen de protection 20 comprend un moyen de maintien 32 pour maintenir l'organe mobile 21 dans la première position sous l'impulsion du moyen soluble et pour guider le déplacement de l'organe mobile de la première position vers une deuxième position.

Ce moyen de maintien 32 comprend un plateau 37 muni de lumières 33, le plateau 37 étant coincé entre un épaulement de la troisième extrémité 31"' et le bouchon 30. Ainsi l'orifice de sortie 22 est disposé entre le plateau 37 et le piston 21' situé en amont de cet orifice de sortie 22.

De plus, le moyen de maintien 32 possède des pattes de maintien 36 espacées angulairement qui saille du plateau 37. Ces pattes de maintien sont alors entourées par le moyen soluble 15', ce moyen soluble plaquant les pattes de maintien 36 contre la deuxième portion distale 25" pour notamment maintenir l'organe mobile dans la première position de la figure 8.

Chaque patte de maintien 36 est avantageusement munie d'un organe de maintien 36' coopérant par interférence de forme avec une portion de maintien de la deuxième portion distale 25". Par exemple, chaque organe de maintien 36' comprend un ergot coopérant avec un créneau d'une portion de maintien 26', 26" de la deuxième potion distale 25". Il est à noter que la deuxième portion distale 25" peut comporter une première portion de maintien 26' et une deuxième portion de maintien 26".

Enfin, un ressort est agencé ente le plateau 37 et la partie de l'organe mobile 21 empêchant la circulation de fluide vers l'orifice de sortie 22, le piston 21' en l'occurrence.

En référence à la figure 8, en l'absence d'eau, le moyen soluble garantit le contact entre les organes de maintien 36' et la première portion de maintien 26' de l'organe mobile. Cet organe mobile se trouve alors dans une première position empêchant notamment le fluide de gonflage présent dans le coussin 11 de s'échapper par l'orifice de sortie 22.

Par contre, en référence à la figure 9, en présence d'eau, le moyen soluble 15' est dissous. En l'absence de l'effort exercé par ce moyen soluble sur les pattes de maintien, le ressort 200 repousse l'organe mobile 21 selon la flèche F1, les pattes de maintien 36 se déplaçant en parallèle selon les flèches F2.

Lorsque l'organe mobile atteint la deuxième position de la figure 9, les organes de maintien 36' peuvent être en prise avec la deuxième portion de maintien 26" de l'organe mobile.

Dans cette position, le fluide de gonflage du coussin 11 peut s'échapper vers l'extérieur EXT par l'orifice de sortie 22 conformément aux flèches F3, et éventuellement via les lumières 34 du bouchon qui constitue des orifices de sortie additionnelles. On note que la pression de la sangle sur l'enveloppe du coussin favorise cette expulsion du fluide de gonflage.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Dispositif de protection (10) d'un occupant (7) d'un véhicule (1) comprenant un coussin (11) gonflable et un moyen de gonflage (12) de ce coussin (11), le moyen de gonflage (12) étant relié au coussin (11) par une tuyauterie d'alimentation (13) en fluide de gonflage pour gonfler le coussin (11) dans des conditions prédéterminées,
**caractérisé en ce qu'**il comporte un moyen d'expulsion (20) dudit fluide coopérant avec au moins un moyen de détection d'un événement prédéterminé pour évacuer ledit fluide suite à un gonflement du coussin (11) lorsque ledit événement se produit postérieurement au gonflement du coussin, ledit coussin (11) étant muni d'une sangle (50) élastique périphérique pour optimiser le dégonflement dudit coussin (11) lorsque ledit moyen d'expulsion (20) permet une évacuation dudit fluide hors du coussin (11).

2. Dispositif selon la revendication 1,
**caractérisé en ce que** ledit moyen d'expulsion (20) est agencé sur ladite tuyauterie d'alimentation (13).

3. Dispositif selon l'une quelconque des revendications 1 à 2,
**caractérisé en ce que** ledit événement est à choisir dans une liste incluant la présence d'eau, la présence d'un incendie et l'ouverture d'une ceinture de sécurité postérieurement au gonflement du coussin.

4. Dispositif selon l'une quelconque des revendications 1 à 3,
**caractérisé en ce que** ledit moyen d'expulsion (20) comportant un orifice de sortie (22) et un organe mobile (21) apte à empêcher un passage du fluide de gonflage au travers dudit orifice de sortie (22) en l'absence dudit événement prédéterminé, ledit moyen de détection (15) coopère avec ledit organe mobile (21) pour permettre le passage du fluide de gonflage au travers dudit orifice de sortie (22) en présence dudit événement prédéterminé.

5. Dispositif selon la revendication 4,
**caractérisé en ce que** ledit moyen de détection (15) inclut un organe de détection d'eau pourvu d'un moyen soluble (15') coopérant avec ledit organe mobile (21).

6. Dispositif selon l'une quelconque des revendications 1 à 5,
**caractérisé en ce que** ledit moyen de gonflage (12) comporte un gonfleur (12') relié audit coussin (11) par ladite tuyauterie d'alimentation (13) et comporte une unité de contrôle (14) reliée audit gonfleur (12'), ladite unité de contrôle (14) ordonnant au gonfleur (12') de gonfler le coussin dans lesdites conditions prédéterminées.

7. Dispositif selon la revendication 6,
**caractérisé en ce que** ladite unité de contrôle (14) comporte une batterie (14') électrique et un commutateur (14") reliés en série au gonfleur (12'), ledit moyen d'expulsion (20) étant relié électriquement au gonfleur (12') et à l'unité de contrôle (14).

8. Dispositif selon l'une quelconque des revendications 6 à 7,
**caractérisé en ce que** ledit moyen de détection (15) comprend un capteur (100) dudit événement relié électriquement à un interrupteur principal (110) agencé entre ledit gonfleur (12') et ledit moyen d'expulsion (20), ledit interrupteur principal (110) étant fermé quand ledit événement se produit, un condensateur (130) étant électriquement disposé en parallèle dudit moyen d'expulsion (20) et de l'interrupteur principal (110) entre ledit gonfleur (12') et ladite unité de contrôle (14).

9. Dispositif selon l'une quelconque des revendications 6 à 8,
**caractérisé en ce qu'**il comporte un interrupteur secondaire (120) agencé entre ladite unité de contrôle (14) et ledit gonfleur (12') coopérant avec le moyen de détection.

10. Siège (2) de véhicule (1),
**caractérisé en ce qu'**il comporte un dispositif de protection (20) selon l'une quelconque des revendications 1 à 9.

11. Siège de véhicule selon la revendication 10,
**caractérisé en ce que** ledit coussin (11) est agencé sur une ceinture de sécurité (6) dudit siège (2).

12. Siège de véhicule selon l'une quelconque des revendications 10 à 11,
**caractérisé en ce que** ledit siège (2) ayant une zone d'assise (3) et une zone dorsale (4), ledit moyen de détection (15) est déporté par rapport auxdites zones (3, 4).

13. Véhicule (1),
**caractérisé en ce qu'**il comporte un dispositif de protection (20) selon l'une quelconque des revendications 1 à 9.

## Patentansprüche

1. Schutzvorrichtung (10) eines Insassen (7) eines Fahrzeugs (1) mit einem aufblasbaren Kissen (11) und einem Mittel (12) zum Aufblasen dieses Kissens (11), wobei das Mittel (12) zum Aufblasen mit dem Kissen (11) über ein Rohrsystem (13) zur Speisung mit einem Aufblasfluid verbunden ist, um das Kissen (11) unter vorbestimmten Bedingungen aufzublasen,
**gekennzeichnet durch** ein Mittel (20) zum Austreiben des Fluids, welches mindestens mit einem Mittel zur Erfassung eines vorbestimmten Ereignisses zusammenwirkt, um das Fluid nach einem Aufblasen des Kissens (11) abzulassen, wenn das Ereignis nach dem Aufblasen des Kissens stattfindet, wobei das Kissen (11) mit einem elastischen Umfangsgurt (50) versehen ist, um das Entleeren des Kissens (11) zu optimieren, während das Austreibemittel (20) ein Ablassen des Fluids aus dem Kissen (11) ermöglicht.

2. Vorrichtung nach Anspruch 1,
**dadurch gekennzeichnet, dass** das Austreibemittel (20) auf dem Einspeiserohrsystem (13) angeordnet ist.

3. Vorrichtung nach einem der Ansprüche 1 bis 2,
**dadurch gekennzeichnet, dass** das Ereignis aus einer Liste zu wählen ist, die das Vorhandensein von Wasser, das Auftreten eines Brandes und das Öffnen eines Sicherheitsgurts nach dem Aufblasen des Kissens umfasst.

4. Vorrichtung nach einem der Ansprüche 1 bis 3,
**dadurch gekennzeichnet, dass** das Austreibemittel (20) eine Ausgangsöffnung (22) und ein bewegliches Element (21) aufweist, welches den Durchgang von Aufblasfluid durch die Ausgangsöffnung (22) in Abwesenheit des vorbestimmten Ereignisses verhindern kann, wobei das Erfassungsmittel (15) mit dem beweglichen Element (21) zusammenwirkt, um den Durchgang des Aufblasfluids durch die Ausgangsöffnung (22) bei dem Auftreten des vorbestimmten Ereignisses zu erlauben.

5. Vorrichtung nach Anspruch 4,
**dadurch gekennzeichnet, dass** das Erfassungsmittel (15) ein Element zur Erfassung von Wasser umfasst, mit einem löslichen Mittel (15'), welches mit dem beweglichen Element (21) zusammenwirkt.

6. Vorrichtung nach einem der Ansprüche 1 bis 5,
**dadurch gekennzeichnet, dass** das Aufblasmittel (12) ein Blasorgan (12') aufweist, welches mit dem Kissen (11) über das Einspeiserohrsystem (13) verbunden ist, und eine Steuereinheit (14) aufweist, die mit dem Blasorgan (12') verbunden ist, wobei die Steuereinheit (14) dem Blasorgan (12') den Befehl gibt, das Kissen unter den vorbestimmten Bedingungen aufzublasen.

7. Vorrichtung nach Anspruch 6,
**dadurch gekennzeichnet, dass** die Steuereinheit (14) eine elektrische Batterie (14') und einen Umschalter (14") aufweist, die in Reihe mit dem Blasorgan (12') geschaltet sind, wobei das Austreibemittel (20) elektrisch mit dem Blasorgan (12') und der Steuereinheit (14) verbunden ist.

8. Vorrichtung nach einem der Ansprüche 6 bis 7,
**dadurch gekennzeichnet, dass** das Erfassungsmittel (15) einen Detektor (100) des Ereignisses aufweist, der elektrisch mit einem Haupt-Unterbrecherschalter (110) verbunden ist, der zwischen dem Blasorgan (12') und dem Austreibemittel (20) angeordnet ist, wobei der Haupt-Unterbrecherschalter (110) geschlossen ist, wenn das Ereignis eintritt, wobei ein Kondensator (130) elektrisch parallel zu dem Austreibemittel (20) und dem Haupt-Unterbrecherschalter (110) zwischen dem Blasorgan (12') und der Steuereinheit (14) geschaltet ist.

9. Vorrichtung nach einem der Ansprüche 6 bis 8,
**dadurch gekennzeichnet, dass** sie einen Neben-Unterbrecherschalter (120) aufweist, der zwischen der Steuereinheit (14) und dem Blasorgan (12') angeordnet ist und mit dem Erfassungsmittel zusammenwirkt.

10. Sitz (2) eines Fahrzeugs (1),
**dadurch gekennzeichnet, dass** er eine Schutzvorrichtung (20) nach einem der Ansprüche 1 bis 9 aufweist.

11. Sitz eines Fahrzeugs nach Anspruch 10,
**dadurch gekennzeichnet, dass** das Kissen (11) auf einem Sicherheitsgurt (6) des Sitzes (2) angeordnet ist.

12. Sitz eines Fahrzeugs nach einem der Ansprüche 10 bis 11,
**dadurch gekennzeichnet, dass** der Sitz (2) eine Sitzfläche (3) und eine Rückenlehne (4) aufweist, wobei das Erfassungsmittel (15) bezüglich dieser Bereiche (3, 4) versetzt angeordnet ist.

13. Fahrzeug (1),
**dadurch gekennzeichnet, dass** es eine Schutzvorrichtung (20) nach einem der Ansprüche 1 bis 9 aufweist.

## Claims

1. Device (10) for protecting an occupant (7) of a vehicle (1), comprising an airbag (11) and a means (12) for inflating said airbag (11), the inflating means (12) being connected to the airbag (11) via a supply pipe (13) for supplying inflation fluid in order to inflate the airbag (11) under predetermined conditions,
**characterised in that** it comprises a means (20) for expelling said fluid, cooperating with at least one means for detecting a predetermined event in order to evacuate said fluid following an inflation of the airbag (11) when said event occurs subsequent to the inflation of the airbag, said airbag (11) being provided with a peripheral elastic strap (50) for optimising the deflation of said airbag (11) when said expelling means (20) allows an evacuation of said fluid from the airbag (11).

2. Device according to Claim 1,
**characterised in that** said expelling means (20) is arranged on said supply pipe (13).

3. Device according to any one of Claims 1 to 2,
**characterised in that** said event is to be chosen from a list including the presence of water, the presence of a fire, and the opening of a seat harness subsequent to the inflation of the airbag.

4. Device according to any one of Claims 1 to 3,
**characterised in that**, with said expelling means (20) comprising an outlet orifice (22) and a movable member (21) suitable for preventing the inflation fluid from passing through said outlet orifice (22) in the absence of said predetermined event, said detecting means (15) cooperates with said movable member (21) to allow the inflation fluid to pass through said outlet orifice (22) in the presence of said predetermined event.

5. Device according to Claim 4,
**characterised in that** said detecting means (15) includes a water detecting member provided with a soluble means (15') cooperating with said movable member (21).

6. Device according to any one of Claims 1 to 5,
**characterised in that** said inflating means (12) comprises an inflator (12') connected to said airbag (11) via said supply pipe (13), and comprises a control unit (14) connected to said inflator (12'), said control unit (14) instructing the inflator (12') to inflate the airbag under said predetermined conditions.

7. Device according to Claim 6,
**characterised in that** said control unit (14) comprises an electrical battery (14') and a changeover switch (14") which are connected in series to the inflator (12'), said expelling means (20) being connected electrically to the inflator (12') and to the control unit (14).

8. Device according to any one of Claims 6 to 7,
**characterised in that** said detecting means (15) comprises a sensor (100) for sensing said event, which is connected electrically to a main switch (110) arranged between said inflator (12') and said expelling means (20), said main switch (110) being closed when said event occurs, a capacitor (130) being arranged electrically in parallel with said expelling means (20) and the main switch (110) between said inflator (12') and said control unit (14).

9. Device according to any one of Claims 6 to 8,
**characterised in that** it comprises a secondary switch (120) arranged between said control unit (14) and said inflator (12'), cooperating with the detecting means.

10. Seat (2) for a vehicle (1),
**characterised in that** it comprises a protecting device (20) according to any one of Claims 1 to 9.

11. Vehicle seat according to Claim 10,
**characterised in that** said airbag (11) is arranged on a seat harness (6) of said seat (2).

12. Vehicle seat according to any one of Claims 10 to 11,
**characterised in that**, with said seat (2) having a seat zone (3) and a back zone (4), said detecting means (15) is remote relative to said zones (3, 4).

13. Vehicle (1),
**characterised in that** it comprises a protecting device (20) according to any one of Claims 1 to 9.
